**Europäisches Patentamt**

**European Patent Office**

**Office européen des brevets**

(19)

(11) Veröffentlichungsnummer: **0 142 466**
**B1**

(12) **EUROPÄISCHE PATENTSCHRIFT**

(45) Veröffentlichungstag der Patentschrift:
07.12.88

(51) Int. Cl.⁴: **G 02 B 25/00**

(21) Anmeldenummer: **84810442.8**

(22) Anmeldetag: **11.09.84**

(54) **Lupe.**

(30) Priorität: **19.09.83 CH 5062/83**

(43) Veröffentlichungstag der Anmeldung:
**22.05.85 Patentblatt 85/21**

(45) Bekanntmachung des Hinweises auf die Patenterteilung:
**07.12.88 Patentblatt 88/49**

(84) Benannte Vertragsstaaten:
**AT DE FR GB IT NL SE**

(56) Entgegenhaltungen:
**EP-A- 0 029 005**
**DE-A- 2 708 691**
**DE-C- 303 316**

**PATENT ABSTRACTS OF JAPAN Band 6, Nr. 2, 8. Januar 1982, Seite (P-96) (880)**

(73) Patentinhaber: **Canzek, Ludvik, Dr., Quellmattstrasse 3, CH-5035 Unterentfelden (CH)**

(72) Erfinder: **Canzek, Ludvik, Dr., Quellmattstrasse 3, CH-5035 Unterentfelden (CH)**

(74) Vertreter: **de Dominicis, Silvia Giovanna et al, de Dominicis & Partners s.a.s. Via Brera 6, I-20121 Milano (IT)**

**Beschreibung**

Die Erfindung betrifft eine Lupe gemäss Oberbegriff des Patentanspruchs.

Lupen dieser Art sind bekannt und werden vorwiegend in optoelektronischen Geräten verwendet, um das Bild auf der Anodenfläche einer elektronischen Röhre zu beobachten. Diese Lupen sollen nicht nur von sehr guter Abbildungsqualität sein, sie sollen auch eine kurze Baulänge haben, um dadurch leicht und handlich zu sein, wei sie meistens in tragbaren optoelektronischen Geräten, wie z.B. in Beobachtungs- oder Zielfernrohren für Nachtsicht- oder Wärmebildtechnik eingebaut sind.

Der Stand der Technik ist mit den Schriften DE-A-2 708 691 und EP-A-29 005 gegeben.

DE-A-2 708 691 beschreibt Lupen, die nur 5 Linsen und einen Abstand der im folgenden kurz AP genannten Austrittspupille vom letzten Linsenscheitel von über 0.58f (f = Brennweite) aufweisen. Ihr grosser Nachteil liegt in der ausgesprochen grossen Baulänge von 2.53f, wobei die Summe der Linsendicken den Wert 2.2f übersteigt. Darüber hinaus werden noch Gläser mit einer Dichte von mindestens 3.78 g/cm$^3$ verwendet. So

eine Lupe ist nicht nur schwer und unhandlich, sie ist auch in der Herstellung teuer.

In der EP-A-29 005 ist eine Lupe angegeben, bei der die Baulänge und die Summe der Linsendikken kleiner sind (1.5f bzw. 1.3f), die Lupe hat aber insgesamt 6 Linsen. Ihr grösster Nachteil liegt in einem recht kurzen Abstand der AP vom letzten Linsenscheitel, der einen Wert von nur 0.57f hat. Aus diesem Grund kann eine derartige Lupe nicht in einer kurzen Brennweite ausgeführt oder in Geräten verwendet werden, die auf einer Schusswaffe montiert sind. Die Lupe hat ausserdem eine sehr grosse Verzeichnung, die bei einem Bildfeldwinkel von 24.6 Grad 10.8% beträgt.

Diese Beispiele zeigen, dass die Baulänge und der Abstand der AP vom letzten Linsenscheitel gleichläufige Grössen sind und dass eine einfach gebaute Lupe mit kurzer Baulänge und weitentfernter AP sowie mit gut korrigierter Verzeichnung nicht bekannt ist.

Versucht man bekannte Systeme in dem Sinne abzuändern, dass man die Baulänge verkürzt, so wird der Abstand der AP kleiner und die Verzeichnung grösser. Diese Tatsache kann an oben erwähnten Beispielen nachgewiesen werden:

| Schrift | Baulänge | Abstand AP | Verzeichnung bei 20 Grad |
|---|---|---|---|
| DE-A-2 708 691 | 2.53f | 1.33f | ca. 5% |
| EP-A-29 005 | 1.5f | 0.57f | über 8% |

Es sei hier noch bemerkt, dass die Verkürzung der Baulänge in der EP-A-29 005 nicht nur einen kürzeren Abstand der AP vom letzten Linsenscheitel und eine grössere Verzeichnung zur Folge hat, sondern die Lupe auch eine Linse mehr hat.

Ausgehend vom beschriebenen Stand der Technik liegt der Erfindung die Aufgabe zugrunde, eine Lupe zu berechnen, die trotz einer weitentfernten AP und einer guten Abbildungsqualität eine kurze Baulänge, bzw. einen kleinen Wert für die Summe aller Linsendicken aufweist.

Die diese Aufgabe lösende erfindungsgemässe Lupe ist im Patentanspruch beschrieben.

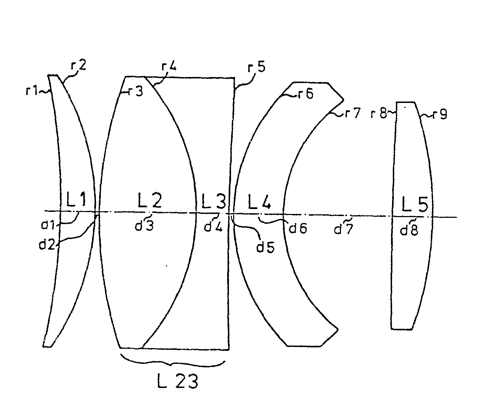

Die Erfindung wird nachfolgend anhand der Zeichnung und des Ausführungsbeispiels gemäss der Tabelle des Patentanspruchs näher erklärt. Die Zeichnung zeigt die erfindungsgemässe Lupe in schematischer Darstellung. Den gegenstandsseitigen Teil bildet die Meniskuslinse L1. Der mittlere Teil besteht aus den Linsen L2 und L3 und der augenseitige Teil aus den Linsen L4 und L5, die durch den Luftabstand d7 getrennt sind. Die Linse L1 ist zum Gegenstand, die Linse L4 zum Auge konkav.

Der Tabelle des Patentanspruchs ist zu entnehmen, dass die Baulänge 1.271f, die Summe der Linsendicken 0.887f und die Dicke d1 der gegenstandsseitigen Meniskuslinse L1 nur 0.131f beträgt, dass bei den volumenmässig grössten Linsen, ohne Konstruktionsdaten ändern zu müssen, die normalen Gläser durch wesentlich leichtere ersetzt werden können und dass damit eine weitere erhebliche Gewichtsreduktion erzielbar ist. Die Lupe nach der Tabelle ist auch einfach gebaut, sie umfasst nur 5 Linsen, wobei die Linsen L2 und L3 in L23 gekittet werden können.

Optische Berechnungen zeigen einen sehr guten Korrektionszustand. Legt man die AP mehr als 0.58f hinter die Lupe, so beträgt die Verzeichnung für einen Bildwinkel von 20 Grad ca. 6%. Diesen Wert kann man bei einer Einstellung, bei der augenseitig eine Strahlendivergenz zustande kommt, unter 3% bringen, wenn gleichzeitig als Gegenstand die gekrümmte Fläche einer Fiberglaslinse verwendet wird.

**Patentanspruch**

1. Lupe mit der Brennweite f, bei der der Abstand der Austrittspupille vom letzten Linsenscheitel mindestens 0.58f beträgt, gekennzeichnet durch folgende auf die Brennweite f = 1.000 bezogene Daten:

| Fläche Nr. | Radius r | Abstand d | Glasart |
|---|---|---|---|
| 1 | −2.036 | 0.131 | La FN21 |
| 2 | −0.860 | 0.004 | |
| 3 | 1.453 | 0.331 | SK15 (SKL15) |
| 4 | −0.697 | 0.114 | SF11 (SFL11) |

(Fortsetzung)

| Fläche Nr. | Radius r | Abstand d | Glasart |
|---|---|---|---|
| 5 | 11.079 | 0.004 | |
| 6 | 0.617 | 0.168 | SF11 (SFL11) |
| 7 | 0.533 | 0.376 | |
| 8 | 15.576 | 0.143 | LaFN21 |
| 9 | −1.184 | | |

## Claim

1. Magnifier having the focal length f, in which the distance of the exit pupil from the last lens vertex is at least 0.58f, characterized by the following data related to the focal length f = 1,000:

| Surface No. | Radius r | Distance d | Type of glass |
|---|---|---|---|
| 1 | −2.036 | 0.131 | LaFN21 |
| 2 | −0.860 | 0.004 | |
| 3 | 1.453 | 0.331 | SK15 (SKL15) |
| 4 | −0.697 | 0.114 | SF11 (SFL11) |
| 5 | 11.079 | 0.004 | |
| 6 | 0.617 | 0.168 | SF11 (SFL11) |
| 7 | 0.533 | 0.376 | |

(Fortsetzung)

| Surface No. | Radius r | Distance d | Type of glass |
|---|---|---|---|
| 8 | 15.576 | 0.143 | LaFN21 |
| 9 | −1.184 | | |

## Revendication

1. Loupe de distance focale f, dans laquelle la distance de la pupille de sortie depuis le dernier sommet de lentille est d'au moins 0,58f, caractérisée per les données suivantes rapportées à la distance focale f = 1.000:

| Surface Nr. | Rayon r | Distance d | Type de verre |
|---|---|---|---|
| 1 | −2.036 | 0.131 | LaFN21 |
| 2 | −0.860 | 0.004 | |
| 3 | 1.453 | 0.331 | SK15 (SKL15) |
| 4 | −0.697 | 0.114 | SF11 (SFL11) |
| 5 | 11.079 | 0.004 | |
| 6 | 0.617 | 0.168 | SF11 (SFL11) |
| 7 | 0.533 | 0.376 | |
| 8 | 15.576 | 0.143 | LaFN21 |
| 9 | −1.184 | | |

L 23